# EUROPÄISCHE PATENTSCHRIFT

(11) **EP 0 794 681 B1**
(45) Veröffentlichungstag und Bekanntmachung des Hinweises auf die Patenterteilung: **15.09.2004**
(21) Anmeldenummer: 96119835.5
(22) Anmeldetag: 11.12.1996
(51) Int. Cl.: H04Q 7/38, H04Q 7/22

(54) **Verfahren zur automatischen Vermittlung von Gesprächs- und/oder Datenübertragungsverbindungen und Zentrale dazu**
Method for automatic connection of voice and/or data links and exchange therefor
Procédé pour l'établissement automatique de connexions de parole et/ou données et centrale correspondante

(30) Priorität: 08.03.1996 DE 19608942
(43) Veröffentlichungstag der Anmeldung: 10.09.1997
(73) Patentinhaber: Tenovis GmbH & Co. KG, 60362 Frankfurt am Main (DE)
(72) Erfinder: Borgmann, Udo, 38302 Wolfenbuettel (DE); Somrei, Arno, 38162 Cremlingen (DE)
(74) Vertreter: Wilhelm, Jürgen, Dipl.-Phys.

(56) Entgegenhaltungen:
- WO-A-95/33349
- WO-A-95/35001
- US-A- 5 206 903
- US-A- 5 432 840
- PATENT ABSTRACTS OF JAPAN vol. 18, no. 121 (P-1700), 25.Februar 1994 & JP 05 307693 A (HITACHI BUILDING SYST. ENG. & SERVICE CO. LTD.)
- HASSLER ET AL.: "Revolutionizing DEFINITY Call Centers in the 1990s" AT&T TECHNICAL JOURNAL, Bd. 74, Nr. 4, 1.Juli 1995, NEW YORK, Seiten 64-73, XP000517580

## Beschreibung

### Stand der Technik

Die Erfindung bezieht sich auf ein Verfahren zur automatischen Vermittlung von Gesprächs- und/oder Datenübertragungsverbindungen und einer Zentrale dazu nach der Gattung der unabhängigen Ansprüche 1 bzw. 9.

Die Erfindung geht von einem Stand der Technik aus, wie er aus der Druckschrift D1 (US 5 432 840 A) bekannt ist. Aus dieser Druckschrift geht ein Verfahren bzw. eine Zentrale zum Herstellen von Kommunikationsverbindungen zwischen einem Benutzer eines ortsgebundenen Telefons und einem bestimmten Teilnehmer aus einer Gruppe von mobilen Teilnehmern hervor. Hierzu wählt der ortsgebundene Teilnehmer eine auf die Gruppe der mobilen Teilnehmer verweisende und als "group number" bezeichnete Rufnummer, welche sich auf die Kompetenz, also die allen Teilnehmern der Gruppe zugeordneten gemeinsamen "Fähigkeiten" bezieht. Anhand von in einer Datenbank oder Tabelle abgelegten als "priority" bezeichneten Prioritätsinformationen wird anschließend eine Verbindung zwischen dem ortsgebundenen Teilnehmer und demjenigen mobilen Teilnehmer hergestellt, welcher die höchste Priorität aufweist.

Dieses Verfahren ist in der Druckschrift D1 detailliert anhand eines Verbindungsaufbaus von einem ortsgebundenen Teilnehmer zu einem Taxi, also einem mobilen Teilnehmer aus der Gruppe mit der Kompetenz "Taxi", offenbart. Die Prioritätsinformationen ergeben sich unter anderem aus den Entfernungen zwischen dem ortsgebundenen Teilnehmer und den Taxis sowie ob ein Taxi verfügbar ist. Im Gegensatz zur fest vorgegebenen Kompetenzinformation hängen die Prioritätsinformationen demzufolge vom jeweiligen Zustand oder Ort der betreffenden Teilnehmer ab.

Die Druckschrift D1 sieht jedoch nicht vor, Kommunikationsverbindungen zu Teilnehmern mit unterschiedlichen Kompetenzen aufzubauen. Auch kommt nicht in Betracht, Verbindungen zu mehreren Teilnehmern einer Kompetenz herzustellen.

Aufgabe und Lösung Aufgabe der Erfindung ist es, ausgehend vom Stand der Technik ein flexibleres Verfahren bzw. eine flexiblere Zentrale bereit zu stellen, welche das Herstellen einer Kommunikationsverbindung mit einem bzw. mehreren räumlich nächstliegenden Teilnehmern einer bestimmten Kompetenz aus einer Anzahl von Teilnehmern unterschiedlicher Kompetenzen verbunden mit einem geringen Zeitaufwand ermöglichen.

Diese Aufgabe wird erfindungsgemäß dadurch gelöst, dass den Teilnehmern Kompetenzinformationen und Standortinformationen zugeordnet werden und diese Informationen in einer Tabelle eingetragen sind, so dass bei einer Verbindungsnachfrage nach einem oder einer Gruppe Teilnehmer in einem ersten Schritt festgestellt wird, wie viele Teilnehmer welcher Kompetenz gesucht werden, in einem zweiten Schritt die Einträge der Tabelle auf die gewählte(n) Kompetenz(en) überprüft werden und in einem dritten Schritt eine Verbindung mit demjenigen bzw. der Gruppe von Teilnehmern der betreffenden Kompetenz(en) hergestellt wird, welche aufgrund der Tabelle als nächste ausgewiesen werden.

Hierdurch ist die Erfindung insbesondere in Notsituationen zum Herbeirufen von Helfern beispielsweise mit der Kompetenz als "Arzt" oder "Ersthelfer" geeignet, in welchen die Kompetenz der Angerufenen, jedoch nicht die Person im Vordergrund steht, und ein rasches Erscheinen gewünscht wird. Da die Tabelle zuerst bezüglich der Kompetenzinformation überprüft und somit die Zahl der für den Verbindungsaufbau in Betracht kommenden Teilnehmer eingeschränkt wird und erst danach eine Auswahl bezüglich der Standortinformation erfolgt, lassen sich Kommunikationsverbindungen selbst bei einer großen Anzahl an Teilnehmern unterschiedlicher Kompetenzen schnell aufbauen.

Durch die in den abhängigen Ansprüchen aufgeführten Maßnahmen sind vorteilhafte Weiterbildungen und Verbesserungen der in den unabhängigen Ansprüche 1 und 9 angegebenen Gegenstände möglich. Besonders vorteilhaft ist es, das Kommunikationssystem als zellulares System auszubilden, da hierbei die Lokalisierung der einzelnen Teilnehmer ohne großen Zusatzaufwand realisierbar ist. Weiterhin ist es besonders vorteilhaft, die Orts- und Kompetenzinformationen zentral zu verwalten, da das System hierdurch sehr flexibel wird und zusätzliche Komfort- oder Sicherheitsmerkmale relativ einfach zu implementieren sind. Ebenso ist es besonders vorteilhaft, in diese zentrale Verwaltung der Orts- und Kompetenzinformation auch Teilnehmer anderer Netze einzubeziehen, da somit ein integriertes Kommunikationssystem entsteht, welches für jede Kommunikationsart optimale Protokolle benutzt.

### Zeichnung

Ein Ausführungsbeispiel der Erfindung ist in der Zeichnung dargestellt und in der nachfolgenden Beschreibung näher erläutert. Es zeigen:
Figur 1 eine Kommunikationsanlage und
Figur 2 eine Tabelle, in welcher Orts- und Kompetenzinformationen bestimmter Teilnehmer gespeichert sind.

### Beschreibung der Erfindung

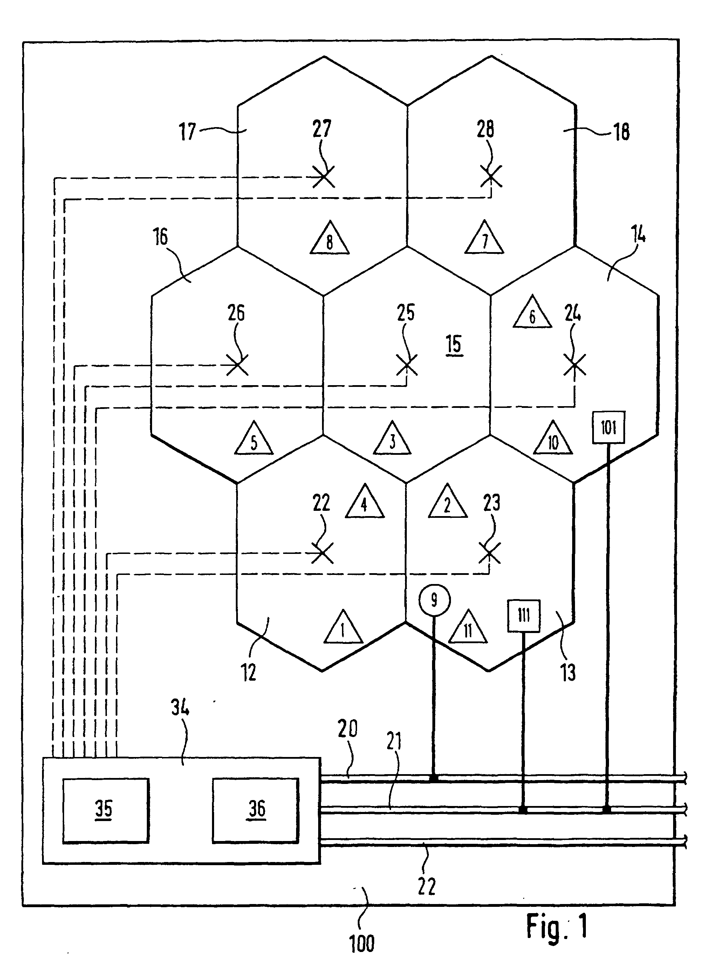

In Figur 1 ist das Gebiet, welches von der Telekommunikationsanlage 100 versorgt wird, in Funkzellen 12 bis 18 mit je einer dazugehörigen Funkbasisstation 22 bis 28 unterteilt. In diesem Gebiet halten sich mobile Teilnehmer 1,2,3,4,5,6,7,8,10,11 auf. Das Gebiet wird von einer Zentrale 34 verwaltet, welche eine Schalteinheit 35 und eine Steuereinheit 36 aufweist. Die mobilen Teilnehmer 1-8, die Funkbasisstationen 22-28 und die Zentrale 35 stellen zusammengenommen eine drahtlose Nebenstellenanlage dar, welche zum Beispiel nach dem DECT-Standard funktioniert. Die Zentraleinheit weist Schnittstellen zu parallel existierenden Netzen auf. Beispiele für solche Netze sind interne oder externe drahtgebundene Netze, Computernetze, Pager, externe Mobilfunknetze. In Figur 1 kennzeichnet 20 eine Schnittstelle zu einem Computernetz, 21 eine Schnittstelle zu einem Pagernetz und 22 die Verbindung zum Postnetz. Über diese Netze werden weitere Teilnehmer in der Telekommunikationsanlage verwaltet: Teilnehmer 9 ist eine Maschine, welche über ihren Steuerrechner mit dem Netz verbunden ist, Teilnehmer 101 und 111 sind Pager.

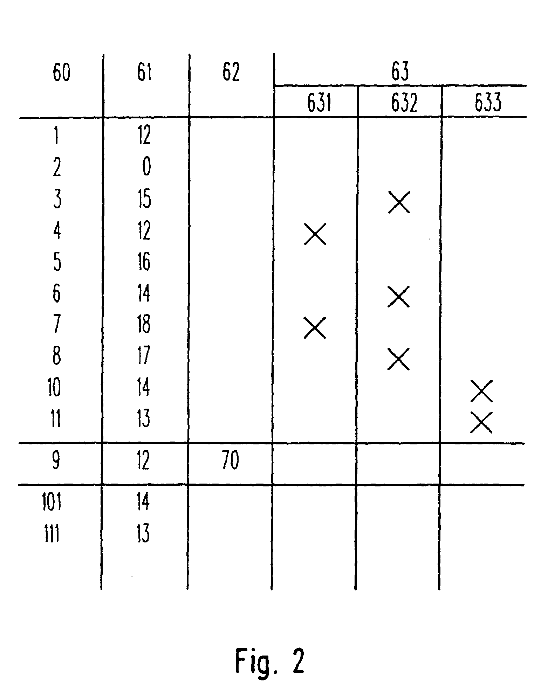

Figur 2 zeigt eine Tabelle, in welcher Standorte und Kompetenzen von Teilnehmern erfaßt sind. Die Tabelle ist in der Steuereinheit 36 in einem Speicher abgelegt. In Spalte 60 sind die Teilnehmer eingetragen, in Spalte 61 die derzeitige Aufenthaltszelle, wobei eine Null Nichtverfügbarkeit des Teilnehmers bedeutet. Die Spalte 62 enthält besondere Hinweise, beipielsweise die Kennzeichnung 70 von Teilnehmer 9 als Maschine. In Spalte 63 sind die Kompetenzen jedes Teilnehmers vermerkt. Beispielsweise wird in 631 die Arztqualifikation vermerkt, in 632 die Qualifikation als Ersthelfer, in 633 technische Zuständigkeit als Ingenieur oder Techniker für die bestimmte Maschinen, beipielsweise Maschine 9.

Die Mobilgeräte 1 bis 8 kommunizieren über die jeweils nächstliegende Basisstation mit der Zentraleinheit 34. Bei jedem Verbindungsaufbau zwischen Mobilgerät und Funkbasisstation wird der Funkbasisstation die Nummer der jeweiligen Mobileinheit mitgeteilt. Diese leitet die Funkbasisstation zusammen mit ihrer eigenen Kennung an die Zentrale weiter, welche somit den Zellenaufenthaltsort des mobilen Teilnehmers kennt. Zusätzlich kann die Zentrale in regelmäßigen Zeitabständen und/oder in Unterlastperioden einen Verbindungsaufbau ohne Klingelzeichen und ohne Textinhalt mit den Mobilgeräten initiieren. Die so gewonnene Information über die Aufenthaltszelle aller Mobilgeräte, insbesondere solchen mit einer bestimmten Kompetenz, wird in eine Tabelle nach Figur 2 eingetragen. Nichtverfügbarkeit infolge von Abwesenheit oder Abschaltung des Mobilgeräts wird ebenfalls duch eine anderweitig nicht verwendete Zellennummer (in diesem Beispiel die Null) vermerkt. In derselben Tabelle sind Informationen über die Kompetenz der jeweiligen Halter der Mobilgeräte erfaßt. Im Beispiel sind Teilnehmer 4 und 7 Ärzte, 3,6,8 sind Ersthelfer. Teilnehmer 10 und 11 sind Techniker mit Fachwissen über eine bestimmte Maschine 9. Diese Informationen werden bei der Installation der Anlage fest vorgegeben, sind aber zu einem späteren Zeitpunkt umprogrammierbar. Mobile Teilnehmer anderer Netze, deren Aufenthaltsort feststellbar ist, werden ebenfalls wie oben beschrieben verwaltet. Räumlich unveränderliche Teilnehmer werden sowohl mit ihrer Kompetenz als auch mit ihrem Standort fest vorgegeben. Im Ausführungsbeispiel ist eine Maschine 9, welche über ihre Computersteuerung an das Netz angeschlossen ist, in Zelle 13 als Teilnehmer ohne Kompetenzen vermerkt.

Aufgrund dieser Tabelle ist es nun möglich, durch Druck einer bestimmten Taste oder einer bestimmten Tastenkombination oder, im Falle der Maschine, durch einen Steuerbefehl, eine Verbindung, welche sich nicht an einen spezifischen Teilnehmer wendet, herzustellen.
Teilnehmer 1 sucht den nächstgelegenen Arzt und drückt hierzu die ARZT-Taste. Hierauf wird eine Sprechverbindung mit Teilnehmer 4 hergestellt.
Der Steuerrechner von Maschine 9 diagnostiziert ein Problem, welches er über das Computernetzwerk an die Zentrale weiterleitet. Hierauf erhält Teilnehmer 11 eine diesbezügliche Nachricht auf dem Display seiner Mobileinheit. Ebenso ist es denkbar, die Techniker über ein Pager-System zu rufen, welches Ortsfeststellung erlaubt. In diesem Falle würde der Teilnehmer mit dem Pager 111 gerufen.
Teilnehmer 5 benötigt zwei Ersthelfer. Durch Wählen werden die beiden sich in den Nachbarzellen aufhaltenden Ersthelfer 3 und 8 verständigt.

Bei einem Nachsuchen um kompetenzgesteuerte Verbindung stellt die Zentrale zuerst fest, wie viele Teilnehmer mit welcher Kompetenz gesucht werden, und welche Art der Verbindung (beispielsweise Sprechverbindung, Weiterleitung einer Nachricht) aufgebaut werden soll. Die ersten m in der Tabelle auffindbaren qualifizierten Teilnehmer werden in einen Zwischenspeicher geschrieben. Die verbleibenden Einträge in der Tabelle werden, sofern sie die entsprechende Kompetenz aufweisen, überprüft, ob sie sich näher am Nachsucher befinden als einer der Einträge im Zwischenspeicher. Wenn ja, wird der letztere durch den ersteren ersetzt. Die Entfernung ist durch die Zahl der mindestens zu durchquerenden Zellengrenzen zwischen Anrufer und anzurufendem Teilnehmer plus eins gegeben.
Beispielsweise beträgt die Entfernung zwischen Teilnehmer 5 in Zelle 16 und Teilnehmer 3 in Zelle 15 zwei Einheiten. Teilnehmer, deren Zellenadresse Nichtverfügbarkeit signalisiert, werden außer acht gelassen. Nach erfolgter Auswahl der Teilnehmer werden die Verbindungen hergestellt. Antwortet einer der ausgewählten Teilnehmer nicht, wird er durch den nächstliegenden, noch nicht kontaktierten Teilnehmer ersetzt.

Eine Abwandlungsmöglichkeit ergibt sich durch die Aufteilung der Zentrale 34 in eine Steuereinheit 36 und eine räumlich getrennte Schalteinheit 35. Die Schalteinheit 35 kann zum Beispiel eine DECT-Nebenstellenanlage sein, die Steuereinheit 36 kann mittels eines flexibel programmierbaren Computers realisiert werden. Die Steuereinheit verwaltet die Tabelle und die Protokolle zum kompetenzgesteuerten Verbindungsaufbau, die Schalteinheit übernimmt Switchboard-Funktionen. Die Tabelle ist dann besonders einfach veränderbar, ebenso die Steuerung für die Schalteinheit.

Eine weitere Abwandlungsmöglichkeit ergibt sich durch die Wahl einer verfeinerten Metrik im Suchalgorithmus nach kompetenten und nahegelegenen Teilnehmern, welche nicht nur topologische Gesichtspunkte in Betracht zieht.
Beispielsweise ist die Kommunikationsanlage gemäß Figur 1 auf einem Fabrikgelände installiert, wobei sich Zellen 14, 15, 16 in einem dreischossigen Bau befinden. Die Zelle 14 ist im Erdgeschoß, die Zelle 15 im ersten Obergeschoß und die Zelle 15 im zweiten Obergeschoß. 12, 13, 17, 18 seien Zellen, welche sich ebenerdig außerhalb des Gebäudes befinden. Die Nähe wird nun nicht nach dem obengenannten Vorschlag festgestellt, sondern mit einem zusätzlichen multiplikativen Faktor versehen, welcher die zu erwartende mittlere Wegezeit zwischen zwei bestimmten Zellen reflektiert. Diese Faktoren werden im Rahmen einer weiteren von der Zentrale verwalteten Datei fest vorgegeben. Im obigen Beispiel würde dies dazu führen, daß die beiden zuerst kontaktierten Ersthelfer die Teilnehmer 3 und 6 sind, obwohl 8 topologisch näher zu 5 ist als 6.

## Patentansprüche

1. Verfahren zur automatischen Vermittlung von Gesprächsverbindungen und/oder Datenübertragungsverbindungen in Telekommunikationsanlagen mit mindestens drei Teilnehmern, von welchen mindestens zwei mobil sind,
**dadurch gekennzeichnet,**
**dass** den Teilnehmern Kompetenzinformationen und Standortinformationen zugeordnet werden, welche in einer Tabelle eingetragen sind, so dass bei einer Verbindungsnachfrage nach einem oder einer Gruppe Teilnehmer zunächst festgestellt wird, wie viele Teilnehmer mit welcher Kompetenz gesucht werden, danach alle Einträge der Tabelle auf die gewählte/n Kompetenz/en überprüft werden und anschließend eine Verbindung mit demjenigen bzw. der Gruppe von Teilnehmern der gewählten Kompetenz/en hergestellt wird, welche aufgrund der Tabelle als nächste ausgewiesen werden.

2. Verfahren nach Anspruch 1, **dadurch gekennzeichnet, dass** das von der Telekommunikationsanlage abgedeckte Gebiet in Zellen aufgeteilt wird und die Standortinformationen der mobilen Teilnehmer durch Zuordnung zu einer Zelle gewonnen werden.

3. Verfahren nach einem der vorhergehenden Ansprüche, **dadurch gekennzeichnet, dass** die Standortinformationen der mobilen Teilnehmer zeitlich wiederkehrend aktualisiert werden.

4. Verfahren nach einem der vorhergehenden Ansprüche, **dadurch gekennzeichnet, dass** die Standorte von nicht mobilen Teilnehmern fest vorgegeben werden.

5. Verfahren nach einem der vorhergehenden Ansprüche, **dadurch gekennzeichnet, dass** in der Tabelle auch Teilnehmer anderer Netze erfasst werden.

6. Verfahren nach einem der vorhergehenden Ansprüche, **dadurch gekennzeichnet, dass** bei einer vorgegebenen Verbindungsnachfrage, welche in einer Verbindung mit m Teilnehmern mit einer gewählten Kompetenz resultieren soll, die m ersten Einträge in der Tabelle mit dieser Kompetenz zwischengespeichert werden, worauf alle anderen Einträge in der Tabelle überprüft werden, ob sie über dieselbe Kompetenz verfügen und gleichzeitig näher sind als einer der Einträge im Zwischenspeicher, und in diesem Falle den jeweiligen Eintrag im Zwischenspeicher ersetzen.

7. Verfahren nach Anspruch 6, **dadurch gekennzeichnet, dass** bei der Feststellung der Entfernung zwischen Verbindungsnachfrager und Teilnehmer die Zellentopologie durch topographische Informationen ergänzt wird.

8. Verfahren nach einem der vorhergehenden Ansprüche, **dadurch gekennzeichnet, dass** nicht verfügbare Teilnehmer in der Tabelle vermerkt werden und ein Verbindungsbegehren mit einem dieser nicht verfügbaren Teilnehmer zu dem dann nächstliegenden verfügbaren Teilnehmer umgeleitet wird.

9. Zentrale (34) für eine Telekommunikationsanlage zur automatischen Vermittlung von Gesprächsverbindungen und/oder Datenübertragungsverbindungen mit mindestens drei Teilnehmern (1 bis 8, 10, 11), von welchen mindestens zwei mobil sind,
**dadurch gekennzeichnet,**
**dass** eine Steuereinheit (36) vorgesehen ist, die eine Tabelle aufweist, in welcher den Teilnehmern zugeordnete Kompetenzinformationen und Standortinformationen eingetragen sind, wobei bei einer Verbindungsnachfrage nach einem oder einer Gruppe Teilnehmer die Zentrale (34) zunächst feststellt, wie viele Teilnehmer mit welcher Kompetenz gesucht werden und danach alle Einträge der Tabelle auf die gewählte/n Kompetenz/en dass überprüft, und dass eine Schalteinheit (35) vorgesehen ist, die eine Verbindung mit demjenigen bzw. der Gruppe von Teilnehmern der gewählten Kompetenz/en herstellt, welche aufgrund der Tabelle als nächste ausgewiesen werden.

10. Zentrale nach Anspruch 9, **dadurch gekennzeichnet, dass** das von der Telekommunikationsanlage abgedeckte Gebiet in Zellen mit je einer zugehörigen Funkbasisstation aufgeteilt wird und die Standortinformationen der mobilen Teilnehmer dadurch gewonnen werden, dass bei jedem Verbindungsaufbau zwischen einem mobilen Teilnehmer und einer Funkbasisstation die Identifikationsnummer des mobilen Teilnehmers an die Funkbasisstation übermittelt wird, wobei die Funkbasisstation diese Information zusammen mit ihrer eigenen Kennung an die Zentrale (34) weitergibt.

11. Zentrale nach Anspruch 10, **dadurch gekennzeichnet, dass** zur Feststellung des Zellenaufenthaltsortes eines mobilen Teilnehmers automatisch durch die Zentrale (34) ein Verbindungsaufbau mit diesem mobilen Teilnehmer initiiert wird.

## Claims

1. A method of automatically establishing voice connections and/or data transmission connections in telecommunication installations with at least three subscribers of which at least two are mobile, **characterised in that** associated with the subscribers are items of competence information and items of position information which are entered in a table so that upon a connection request for a subscriber or a group of subscribers it is firstly established how many subscribers with what competence are being sought, thereafter all entries in the table are checked for the selected competence or competences and then a connection is made with that subscriber or the group of subscribers with the selected competence or competences, which are identified as closest on the basis of the table.

2. A method according to claim 1 **characterised in that** the area covered by the telecommunication installation is divided into cells and the items of position information of the mobile subscribers are obtained by association with a cell.

3. A method according to one of the preceding claims **characterised in that** the items of position information of the mobile subscribers are up-dated recurringly in respect of time.

4. A method according to one of the preceding claims **characterised in that** the positions of non-mobile subscribers are fixedly predetermined.

5. A method according to one of the preceding claims **characterised in that** subscribers of other networks are also recorded in the table.

6. A method according to one of the preceding claims **characterised in that** in the case of a predetermined connection request which is intended to result in a connection to subscribers with a selected competence the first entries in the table with that competence are put into intermediate storage, whereupon all other entries in the table are checked to ascertain whether they have the same competence and at the same time are closer than one of the entries in the intermediate storage means, and **in that** case replace the respective entry in the intermediate storage means.

7. A method according to claim 6 **characterised in that** when establishing the distance between those requesting a connection and subscribers the cell topology is supplemented by topographic information.

8. A method according to one of the preceding claims **characterised in that** unavailable subscribers are noted in the table and a connection request to one of those unavailable subscribers is diverted to the available subscriber which is then closest.

9. A central station (34) for a telecommunication installation for automatically establishing voice connections and/or data transmission connections with at least three subscribers (1 to 8, 10, 11) of which at least two are mobile, **characterised in that** there is provided a control unit (36) having a table in which items of competence information and items of position information associated with the subscribers are recorded, wherein upon a connection request for a subscriber or a group of subscribers the central station (34) firstly establishes how many subscribers with what competence are being sought and thereafter all entries in the table are checked for the selected competence or competences and that there is provided a switching unit (35) which makes a connection with that subscriber or the group of subscribers with the selected competence or competences, which are identified as closest on the basis of the table.

10. A central station according to claim 9 **characterised in that** the region covered by the telecommunication installation is divided into cells each with a respective associated radio base station and the items of position information of the mobile subscribers are obtained **in that** when each connection is made between a mobile subscriber and a radio base station the identification number of the mobile subscriber is communicated to the radio base station, the radio base station forwarding that information together with its own identification to the central station (34).

11. A central station according to claim 10 **characterised in that** for establishing the cell whereabouts of a mobile subscriber a connection set-up with that mobile subscriber is initiated automatically by the central station (34).

## Revendications

1. Procédé pour la commutation automatique de communications téléphoniques vocales et/ou de données dans des installations de télécommunication comportant trois abonnés au moins, dont deux au moins sont mobiles,
**caractérisé en ce que**
des informations relatives à des compétences et à des localisations, répertoriées dans un tableau, sont associées aux abonnés, permettant ainsi, lorsqu'il arrive une demande de communication avec un abonné ou un groupe d'abonnés, de déterminer tout d'abord le nombre d'abonnés recherchés avec telle ou telle compétence, puis de parcourir tous les enregistrements du tableau à la recherche de la / des compétence(s) sélectionnée(s) pour établir ensuite une communication avec l'abonné ou le groupe d'abonnés possédant la/les compétence(s) sélectionnée(s) et étant le plus proche selon le tableau.

2. Procédé selon la revendication 1,
**caractérisé en ce que**
la zone couverte par l'installation de télécommunication est divisée en cellules, les informations relatives à la localisation des abonnés mobiles étant obtenues du fait de leur affectation à une cellule.

3. Procédé selon l'une quelconque des revendications ci-dessus,
**caractérisé en ce que**
les informations relatives à la localisation des abonnés mobiles peuvent être mises à jour périodiquement.

4. Procédé selon l'une quelconque des revendications ci-dessus,
**caractérisé en ce que**
les localisations d'abonnés non mobiles sont enregistrées de façon définitive.

5. Procédé selon l'une quelconque des revendications ci-dessus,
**caractérisé en ce que**
des abonnés d'autres réseaux peuvent également être répertoriés dans le tableau.

6. Procédé selon l'une quelconque des revendications ci-dessus,
**caractérisé en ce que**
dans le cas d'une demande de communication donnée, qui doit résulter en une communication avec (m) abonnés possédant une compétence sélectionnée, les (m) premiers enregistrements avec cette compétence dans le tableau sont reportés dans une mémoire tampon, les autres enregistrements du tableau étant ensuite parcourus pour déterminer s'ils disposent de cette même compétence et s'ils sont, dans le même temps, plus proches que l'un des enregistrements dans la mémoire-tampon, auquel cas ils se substituent à l'enregistrement considéré dans la mémoire-tampon.

7. Procédé selon la revendication 6,
**caractérisé en ce que**
après avoir déterminé la distance séparant le demandeur de la communication et l'abonné, la topologie cellulaire est complétée par des informations topographiques.

8. Procédé selon l'une quelconque des revendications ci-dessus,
**caractérisé en ce que**
les abonnés indisponibles sont notés dans le tableau et une demande de communication avec l'un de ces abonnés indisponibles est redirigée vers l'abonné disponible le plus proche.

9. Central (34) pour une installation de télécommunication pour la communication automatique de communications téléphoniques vocales et/ou de données avec trois abonnés au moins (1 à 8, 10, 11), dont deux au moins sont mobiles,
**caractérisé en ce que**
une unité de commande (36) a été prévue, qui présente un tableau dans lequel sont répertoriées des informations relatives à la compétence et à la localisation associées aux abonnés, sachant que lorsqu'une demande de communication vers un abonné ou un groupe d'abonnés est présente, le central (34) détermine tout d'abord le nombre d'utilisateurs recherchés avec telle ou telle compétence avant de parcourir tous les enregistrements du tableau pour rechercher la / les compétence(s) sélectionnée(s), et une unité de connexion (35) est prévue pour établir la communication avec l'abonné ou le groupe d'abonnés possédant la/les compétence(s) sélectionnée(s), qui est le plus proche selon le tableau.

10. Central selon la revendication 9,
**caractérisé en ce que**
la zone couverte par l'installation de télécommunication est divisée en cellules, chaque cellule étant associée à une station de base, tandis que les informations relatives à la localisation des abonnés mobiles sont obtenues, à chaque établissement d'une communication entre un appareil mobile et une station de base, **en ce que** le numéro d'identification de l'abonné mobile est communiqué à la station de base, laquelle retransmet cette information avec sa propre identification au central (34).

11. Central selon la revendication 10,
**caractérisé en ce que**
pour déterminer la localisation cellulaire d'un abonné mobile, un établissement de communication avec cet abonné mobile est initié.
